# EUROPÄISCHE PATENTSCHRIFT

(11) **EP 2 276 671 B1**
(45) Veröffentlichungstag und Bekanntmachung des Hinweises auf die Patenterteilung: **22.01.2014**
(21) Anmeldenummer: 09727902.0
(22) Anmeldetag: 18.03.2009
(51) Int. Cl.: B65B 57/02, G01N 21/90

(54) **VORRICHTUNG SOWIE VERFAHREN ZUR INSPEKTION VON FLASCHEN ODER DERGLEICHEN BEHÄLTERN**
DEVICE AND METHOD FOR INSPECTING BOTTLES OR SIMILAR CONTAINERS
DISPOSITIF AINSI QUE PROCEDE POUR L'INSPECTION DE BOUTEILLES OU RECIPIENTS ANALOGUES

(30) Priorität: 03.04.2008 DE 102008017427
(43) Veröffentlichungstag der Anmeldung: 26.01.2011
(73) Patentinhaber: KHS GmbH, 44143 Dortmund (DE)
(72) Erfinder: HERMANN, Jürgen, 57520 Rosenheim (DE); BÖCKER, Horst, 58239 Schwerte (DE)
(86) Internationale Anmeldenummer: PCT/EP2009/001981
(87) Internationale Veröffentlichungsnummer: WO 2009/121482

(56) Entgegenhaltungen:
- EP-A- 0 200 478
- EP-A- 0 415 154
- EP-A- 0 804 365
- JP-A- 4 350 015
- US-A- 4 915 237

## Beschreibung

Die Erfindung bezieht sich auf eine Vorrichtung zur Inspektion von Flaschen und/oder dergleichen Behältern, insbesondere zur Erfassung von Formfehlern an Behältern gemäß Oberbegriff Patentanspruch 1. Weiterhin bezieht sich die Erfindung auf ein Verfahren zur Inspektion von Flaschen oder dergleichen Behältern gemäß Oberbegriff Patentanspruch 9.

Bekannt ist u.a. eine inspektionsvorrichtung zur Erfassung von Verschmutzungen, Beschädigungen und anderen Fehlern an Flaschen oder dergleichen Behältern. Die bekannte Vorrichtung umfasst u.a. ein von zwei Kameras (CCD-Kameras) gebildetes Kamerasystem, mit dem über über eine Spiegelanordnung mit einer Vielzahl von Spiegeln im Strahlengang der Kameras von jeder an dem Kamerasystem auf einer Transportstrecke vorbei bewegten Flasche Bilder aus unterschiedlichen Betrachtungsrichtungen erzeugt und diese Bilder in einer Auswertelektronik zur Erfassung von Verschmutzungen oder Beschädigungen ausgewertet werden.

Bekannt ist weiterhin eine Inspektionsvorrichtung (EP 0 804 365 B1) im Wesentlichen bestehend aus einer Erfassungseinrichtung in Form einer CCD-Kamera, die seitlich an einer Transportstrecke angeordnet ist, auf der leere Flaschen aufrecht stehend und um ihre vertikale Flaschenachse rotierend vorbei bewegt werden.

Bekannt ist weiterhin eine Vorrichtung zur Inspektion von Behältern in Form von Flaschen (US 4 915 237 A), bei der die aufrechtstehenden, d.h. mit ihrer Flaschenachse In vertikaler Richtung orientierte Flaschen in einem einspurigen Flaschenstrom dicht aneinander anschließend durch eine inspektionsstrecke bewegt werden auf der von jeweils mehreren, um ihre Flaschenachse gedrehten Flaschen eine Bildfolge mit einer Video-Kamera erzeugt wird. Die Art der Verarbeitung der Bilddaten Ist nicht angegeben. Angestrebt ist vielmehr eine optimale, durch den Flaschenstrom gesteuerte Synchronisation der Videokamera.

Aufgabe der Erfindung ist es, eine Vorrichtung sowie ein Verfahren zum Inspizieren von Flaschen oder dergleichen Behälter aufzuzeigen, und zwar zur Erkennung von eventuellen Formfehlem dieser Behälter. Zur Lösung dieser Aufgabe ist ein Vorrichtung entsprechend dem Patentanspruch 1 ausgebildet. Ein Verfahren zur Inspektion von Flaschen oder dergleichen Behältern ist Gegenstand des Patentanspruchs 9.

Die erfindungsgemäße Vorrichtung ermöglicht bei vereinfachter konstruktiver Ausbildung und hoher Betriebssicherheit ein zuverlässiges Erkennen von Formfehlem bei hoher Leistung (Anzahl der die Inspektionsvorrichtung passierenden Behälter je Zeiteinheit), und zwar dadurch, dass von jedem Behälter mit wenigstens einer Kamera (insbesondere CCD-Kamera) von ein und demselben Behälterbereich wenigstens zwei Bilder erzeugt werden, wobei der Behälter zwischen den Aufnahmen der wenigstens zwei Bildern um eine Dreh- und Schwenkachse, die bei fehlerfreien Behältern die Behälterachse ist, um einen Winkelbetrag gedreht bzw. geschwenkt wird. Die Abbildung des jeweiligen Behälterbereichs erfolgt dabei bevorzugt so, dass die optische Achse der Kamera bzw. des Kamera-Objektivs, d.h. die Aufnahmeachse bei der Aufnahme der wenigstens zwei zu vergleichenden Bilder jeweils in Bezug auf die Dreh- oder Schwenkachse, um die der betreffende bevorzugt rotationssymmetrische Behälter gedreht oder geschwenkt wird, jeweils die selbe Orientierung und Lage aufweist, vorzugsweise radial zu der Dreh- oder Schwenkachse orientiert ist. Durch einfachen Vergleich der wenigstens zwei Bilder kann dann auf das Vorhandensein oder Nichtvorhandensein eines Formfehlers geschlossen werden, d.h. dann, wenn die wenigstens zwei Bilder identisch sind ist dies ein Kriterium für keinen Formfehler. Sind die wenigstens zwei Bilder unterschiedlich, so ist dies ein Kriterium dafür, dass der betreffende Behälter einen Formfehler aufweist.

Formfehler der Behälter sind im Sinne der vorliegenden Erfindung u.a. Abweichungen des Abstandes der Wandfläche und dabei insbesondere der Außenfläche des jeweiligen Behälters von der Dreh- oder Behälterachse, d.h. u.a. zwischen den Aufnahmen um die Behälterachse gedrehten Behälters erfassen, sondern die Kameras sind weiterhin auch bevorzugt so angeordnet und gesteuert, dass zu dem Zeitpunkt, an dem die wenigstens zwei Bilder aufgenommen bzw. erzeugt werden, die Aufnahmeachsen der Kameras die selbe Orientierung in Bezug auf die Dreh- oder Schwenkachse des betreffenden Behälters aufweisen, d.h. beispielsweise radial zu dieser Drehachse orientiert sind. Das Drehen bzw. Rotieren oder Schwenken der Behälter auf der Transportstrecke kann auf unterschiedlichste Weise realisiert sein.

Grundsätzlich besteht auch die Möglichkeit, die Inspektionsvorrichtung so auszubilden, dass die Behälter getaktet durch die Inspektionsvorrichtung bzw. durch eine dortige Inspektionsposition bewegt werden, an der mit einem Kamerasystem die wenigstens zwei Bilder von ein und demselben Behälterbereich jedes Behälters erzeugt bzw. aufgenommen werden, wobei jeder Behälter zwischen den Aufnahmen um eine Dreh- oder Schwenkachse gedreht oder geschwenkt wird und die Orientierung und Lage der Kamera- oder Aufnahmeachse in Bezug auf die Dreh- oder Schwenkachse während der Aufnahmen identisch ist. Nach der Inspektion wird jeder Behälter aus der Inspektionsposition weiterbewegt.

Weiterhin besteht die Möglichkeit das Kamerasystem um die Dreh- und Schwenkachse zu drehen bzw. zu schwenken.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:

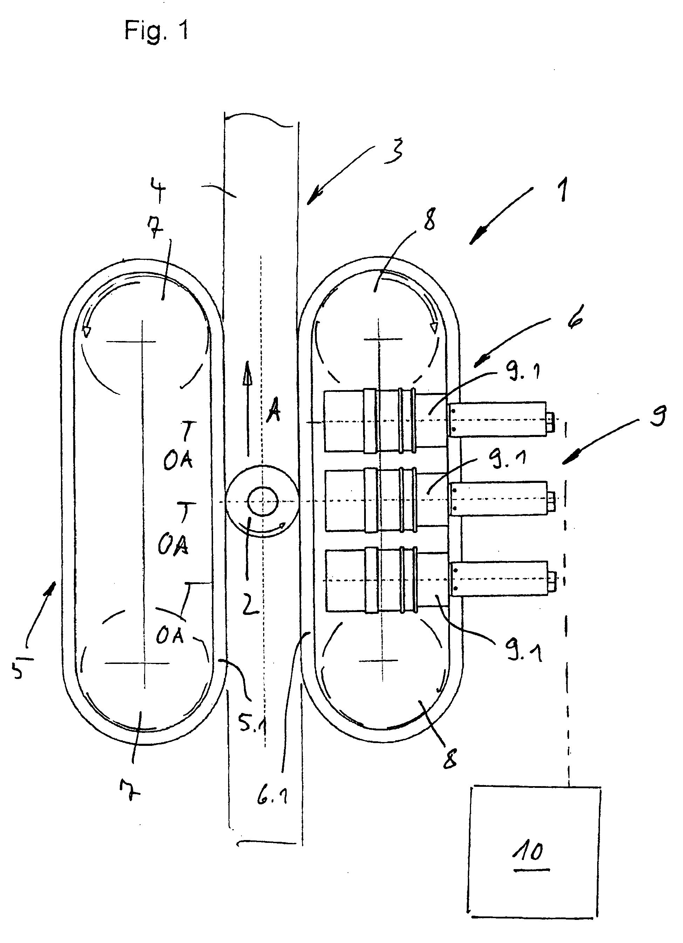

Fig. 1 in sehr vereinfachter schematischer Darstellung eine Inspektionsvorrichtung für Flaschen oder dergleichen Behälter in Draufsicht;

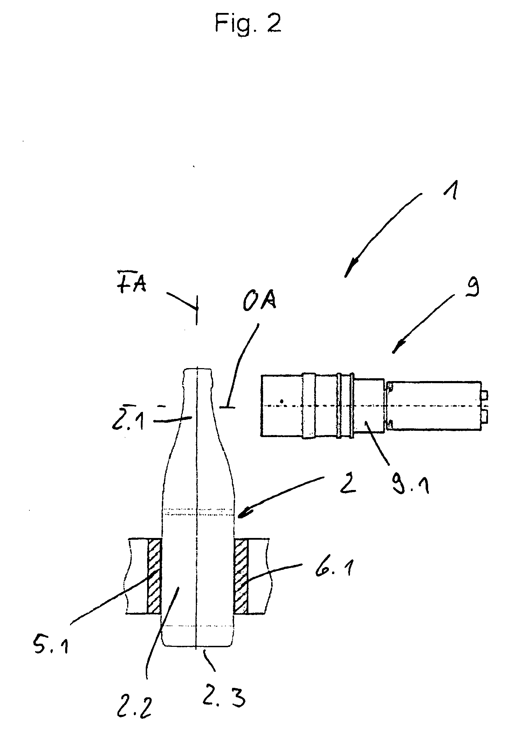

Fig. 2 einen Schnitt entsprechend der Linie I - I der Figur 1.

Die in den Figuren allgemein mit 1 bezeichnete Vorrichtung dient zur Inspektion von Flaschen 2, und zwar speziell zur Erfassung von Formfehlern der Flaschen 2 (Unrundheiten, Exzentrizitäten, Abweichungen von einer rotationssymmetrischen Formgebung usw.) insbesondere an der Flaschenaußenfläche.

Die zu inspizierenden Flaschen 2 werden aufrechtstehend, d.h. mit ihrer Flaschenachse FA in vertikaler Richtung orientiert in Transportrichtung A durch die Vorrichtung 1 bewegt, und zwar als einspuriger Flaschenstrom auf einer von einem Transporteur 3 gebildeten Transportstrecke 4. Im Bereich der Vorrichtung 1 ist die Transportstrecke 4 seitlich jeweils von einer Länge 5.1 bzw. 6.1 eines eine geschlossene Schlaufe bildenden endlos umlaufenden angetriebenen Bandes 5 bzw. 6 begrenzt. Die beiden Bänder sind jeweils über wenigstens zwei Umlenkräder 7 bzw. 8 geführt, die mit ihren Achsen in vertikaler Richtung orientiert sind und von denen jeweils eines durch einen Antrieb umlaufend angetrieben ist, und zwar derart, dass die beiden Bänder 5 und 6, die mit ihren Schlaufenebenen in einer gemeinsamen horizontale Ebene angeordnet sind, sich an den Längen 5.1 und 6.1 in Transportrichtung A bewegen, allerdings mit unterschiedlicher Geschwindigkeit.

Die beiden Bänder 5 und 6 liegen mit ihren Längen 5.1 und 5.2 jeweils mit einer gewissen Anpresskraft gegen die Außenfläche der Flaschen 2 im Rumpfbereich 2.2 dieser Flaschen an, so dass durch die unterschiedlichen Geschwindigkeiten der Bänder 5 und 6 die mit ihrem Flaschenboden 2.3 auf dem Transporteur 3 aufstehenden Flaschen 2 jeweils um eine vertikale Drehachse drehend durch die Vorrichtung 1 bewegt werden.

In der Vorrichtung 1 ist an der Transportstrecke 4 ein Kamerasystem 9 vorgesehen, welches bei der dargestellten Ausführungsform von insgesamt drei CCD-Kameras 9.1 gebildet ist, die an einer Seite der Transportstrecke 4 sich mit dieser Transportstrecke nicht mitbewegend vorgesehen sind, und zwar bei dargestellten Ausführungsform oberhalb des Bandes 6. Die Kameras 9.1 sind weiterhin mit ihren Kameraachsen oder optischen Achsen OA in einer gemeinsamen horizontalen Ebene senkrecht oder quer zur Transportrichtung A orientiert und in Transportrichtung derart gegeneinander versetzt vorgesehen, dass mit jeder Kamera 9.1 zumindest ein Bild ein und des selben Abschnitts, beispielsweise des Halsbereichs 2.1 von jeder die Vorrichtung 1 passierenden Flasche 2 erstellt wird. Die Kameras 9.1 sind weiterhin so positioniert und fokussiert, dass sie jeweils den selben optischen Abstand von einer vertikalen, die Transportrichtung A und auch die Dreh- und Schwenkachsen der Flaschen 2 einschließenden Mittelebene der Transportstrecke 4 aufweisen und auch jeweils das selbe Bildfeld erfassen. Es versteht sich, dass den Kameras 9.1 eine in den Figuren der einfacheren Darstellung wegen nicht gezeigte Beleuchtungseinrichtung zugeordnet ist.

Die von den Kameras 9.1 erzeugten Bilder werden als analoge Bildsignale oder als digitale Datensätze einer beispielsweise von einem Rechner mit geeigneter Peripherie gebildeten Auswert- und Steuerelektronik 10 zugeführt, in der die von den Kameras 9.1 von jeder Flasche 2 erzeugten Bilder mit einem in der Auswert- und Messelektronik 10 abgelegten Programm ausgewertet bzw. verarbeitet werden.

Da die Flaschen 2 aufgrund der unterschiedlichen Geschwindigkeit der Bänder 5 und 6 um ihre vertikale Flaschenachse FA drehend an den Kameras 9.1 vorbei bewegt werden, wird von jeder Flasche 2 mit jeder Kamera 9.1 wenigstens ein die betreffende Flasche 2 bzw. deren Flaschenbereich in einer unterschiedlichen Drehstellung wiedergebendes Bild erzeugt.

Da die beiden Bänder 5 und 6 weiterhin mit ihren Längen 5.1 und 6.1 relativ großflächig an der Außenfläche der Flaschen 2 im Rumpfbereich 2.2 anliegen, erfolgt das Drehen der Flaschen 2 um die Achse, die diese im Rumpfbereich aufweisen. Bei Flaschen 2 ohne Formfehler ist diese Drehachse die Flaschenachse FA ist, die die betreffende Flasche 2 auch außerhalb des Rumpfbereiches 2.2, d.h. beispielsweise am Flaschenhals 2.1 aufweist. Bei Flaschen 2 mit Formfehlern kann die Drehachse, d.h. Achse, die eine solche Flasche 2 im Rumpfbereich 2.1 aufweist, auch durchaus von der Achse im Bereich des Flaschenhalses 2.1 abweichen usw.

Die Auswertung der Bilder erfolgt nach dem Prinzip, dass dann, wenn die von einer Flasche mit den Kameras 9.1 aufgenommenen Bilder identisch oder weitestgehend identisch sind, die betreffende Flasche 2 zumindest an dem mit dem mit den Kameras 9.1 erfassten Bereich keinen Formfehler aufweist, d.h. rotationssymmetrisch oder im Wesentlichen rotationssymmetrisch zur Drehachse ausgebildet ist und auch die Flaschenachse FA in dem von den Kameras 9.1 erfassten Bereich (z.B. Flaschenhals 2.1) nicht von der Drehachse bzw. von der Flaschenachse im Rumpfbereich 2.2 abweicht.

Sind die von den Kameras 9.1 von ein und derselben Flasche erfassten Bilder unterschiedlich, so bedeutet dies, dass die betreffende Flasche einen Formfehler besitzt, beispielsweise in dem von den Kameras 9.1 erfassten Bereich, z.B. Flaschenhals 2.1 unrund oder exzentrisch ist und/oder so verzogen ist, dass keine durchgehende geradlinige Flaschenachse zwischen dem Flaschenboden 2.3 und der gegenüberliegenden Flaschenmündung vorliegt.

Wird an einer Flasche 2 ein Formfehler festgestellt, der außerhalb eines noch zulässigen Toleranzbereichs liegt, so wird durch ein entsprechendes Signal der Auswert- und Steuerelektronik 10 beispielsweise ein Ausschleusen dieser fehlerhaften Flasche 2 bewirkt.

Die Kameras 9.1 sind so gesteuert, dass sie von jeder vorbei bewegten Flasche 2 jeweils wenigstens ein Bild erzeugen, und zwar bevorzugt so, dass die Aufnahmeachse dieser Bilder in Bezug auf die Drehachse des betreffenden Behälters hinsichtlich Lage und Orientierung identisch ist, beispielsweise radial zur Drehachse ist. Die Steuerung der Kameras 9.1 erfolgt z.B. durch nicht näher dargestellte Sensoreinheiten, die das Vorbeibewegen jeweils einer Flasche 2 an der jeweiligen Kamera 9.1 erfassen.

Es versteht sich, dass anstelle der Flaschen 2 mit der Vorrichtung 1 oder einer entsprechend angepassten Vorrichtung auch andere Behälter, insbesondere auch solche mit einer zur Behälterachse rotationssymmetrischen Formgebung inspiziert bzw. auf eventuelle Formfehler hin geprüft werden können.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zugrunde liegende Erfindungsgedanke verlassen wird.

So wurde vorstehend davon ausgegangen, dass das Kamerasystem 9 insgesamt drei Kameras 9.1 aufweist. Selbstverständlich kann die Anzahl der verwendeten Kameras hiervon auch unterschiedlich sein, wobei allerdings zweckmäßiger Weise wenigstens zwei, jeweils ein und denselben Bereich der Flaschen 2 erfassende Kameras 9.1 vorgesehen sind.

Weiterhin besteht die Möglichkeit, das Kamerasystem 9 mit mehreren Gruppen von jeweils wenigstens zwei Kameras 9.1 auszubilden, von denen dann die Kameras 9.1 jeder Gruppe jeweils einen bestimmten Bereich der drehend oder schwenkend an den Kameras 9.1 vorbei geführten Flaschen 2 erfassen.

Weiterhin wurde vorstehend davon ausgegangen, dass die Dreh- oder Schwenkbewegung der Flaschen 2 durch zwei mit unterschiedlicher Geschwindigkeit umlaufende Bänder 5 und 6 erzeugt wird. Selbstverständlich bestehen auch andere Möglichkeiten die Flaschen 2 zu drehen oder zu schwenken, beispielsweise durch Verwendung von drehenden oder schwenkenden Flaschen- oder Behälterträgern, auf oder an den die Flaschen 2 gehalten sind.

### Bezugszeichenliste

- 1: Inspektionsvorrichtung
- 2: Flasche
- 2.1: Flaschenhals
- 2.2: Flaschenrumpf
- 2.3: Flaschenboden
- 3: Transporteur
- 4: Transportstrecke
- 5, 6: umlaufend angetriebenes Band
- 5.1, 6.1: Bandlänge
- 7, 8: Umlenkrad
- 9.1: CCD-Kamera
- 10: Auswert- und Steuerelektronik
- A: Transportrichtung
- FA: Flaschenachse
- OA: optische Achse

## Patentansprüche

1. Inspektionsvorrichtung für Flaschen oder dergleichen Behälter (2), mit einer Transportstrecke (4) für die Behälter (2) und mit einem Kamerasystem (9) zum Aufnehmen von wenigstens zwei Bildern zumindest ein und desselben, rotationssymmetrisch zu einer Dreh- oder Schwenkachse ausgebildeten Behälterbereichs (2.1) jedes inspizierten Behälters (2), mit einer Einrichtung (5, 6) zum Drehen oder Schwenken der Behälter (2) um die Dreh- oder Schwenkachse zwischen den Aufnahmen der wenigstens zwei Bilder sowie mit einer Auswertelektronik zur Auswertung der wenigstens zwei von jedem Behälter (2) erzeugten Bilder,
**dadurch gekennzeichnet,**
**dass** zur Erfassung von Formfehlern der Inspizierten Behälter (2) die Auswertelektronik (10) für einen Vergleich der wenigstens zwei von jedem Behälter (2) erzeugten Bilder ausgebildet ist und einen Formfehler eines Behälters (2) dann feststellt, wenn die wenigstens zwei von ein und denselben Behälterbereich dieses Behälters (2) erzeugten Bilder voneinander abweichen.

2. Inspsktionsvorrichtung nach Anspruch 1, **gekennzeichnet durch** eine Transportstrecke (4) auf der die Behälter (2) in einer Transportrichtung (A) an dem Kamerasystem (9) vorbeibewegt werden.

3. Inspektionsvorrichtung nach Anspruch 3, **dadurch gekennzeichnet, dass** das Kamerasystem (9) wenigstens zwei in Transportrichtung (A) gegeneinander versetzte Kameras (9.1), vorzugsweise CCD-Kameras aufweist.

4. Inspektionsvorrichtung nach einem der vorhergehenden Ansprüche, **gekennzeichnet durch** eine Steuereinrichtung (10) zur Steuerung des Kamerasystems (9) derart, dass die wenigstens zwei Bilder von jedem Behälter (2) in einer Aufnahmeachse erstellt werden, die bei den wenigstens zwei Bilder des jeweiligen Behälters (2) hinsichtlich Lage und Orientierung in Bezug auf die Dreh- oder Schwenkachse Identisch ist, beispielsweise radial zur Dreh- oder Schwenkachse orientiert ist.

5. Inspektionsvorrichtung nach einem der vorhergehenden Ansprüche, **dadurch gekennzeichnet, dass** das Kamerasystem (9) wenigstens zwei Gruppen von jeweils wenigstens zwei Kameras (9.1) aufweist, und dass die wenigstens zwei Kameras (9.1) jeder Gruppe jeweils wenigstens ein Bild von ein und demselben Bereich der Behälter (2), beispielsweise der am Kamerasystem (9) vorbei bewegten Behälter (2) erzeugen.

6. Inspektionsvorrichtung nach einem der vorhergehenden Ansprüche, **dadurch gekennzeichnet, dass** die Einrichtung zum Drehen und/oder Schwenken der Behälter (2) von wenigstens zwei, Anlageflächen für die Behälter (2) bildenden und mit unterschledlicher Geschwindigkeiten und/oder Richtung endlos umlaufend antreibbaren Bändern (5, 6) gebildet sind.

7. Inspektionsvorrichtung nach einem der vorhergehenden Ansprüche, **dadurch gekennzeichnet, dass** die Einrichtung zum Drehen und/oder Schwenken der Behälter (2) rotierende und/oder schwenkende Behälterträger aufweist, beispielsweise Behälterträger für eine hängende oder stehende Anordnung der Behälter (2), wobei die rotierenden und/oder schwenkenden Behälterträger z. B. In einer Transportrichtung (A) bewegbar sind.

8. Verfahren zur Inspektion von Flaschen oder dergleichen Behältern (2) auf eventuelle Formfehler, wobei mit einem Kamerasystem (9) von ein und desselben, rotationssymmetrisch zu einer Dreh- oder Schwenkachse ausgebildeten Behälterbereich (2.1) jedes Behälters (2) wenigstens zwei Bilder erstellt werden, und wobei jeder Behälter (2) und/oder das Kamerasystem (9) zwischen den Aufnahmen der wenigstens zwei Bilder um eine Dreh- oder Schwenkachse gedreht werden, **dadurch gekennzeichnet, dass** zur Erfassung eines eventuellen Formfehlers des jeweils inspizierten Behälters (2) die wenigstens zwei von jedem Behälter (2) erzeugten Bilder verglichen werden und bei einem Abwelchen dieser Bilder ein Formfehler des betreffenden Behälters (2) festgestellt wird.

9. Verfahren nach Anspruch 8, **dadurch gekennzeichnet, dass** die Behälter (2) auf einer Transportstrecke (4) in einer Transportrichtung (A) an dem Kamerasystem (9) vorbeibewegt werden.

10. Verfahren nach Anspruch 9, **dadurch gekennzeichnet, dass** das Kamerasystem (9) wenigstens zwei in Transportrichtung (A) gegeneinander versetzte Kameras (9.1), vorzugsweise CCD-Kameras aufweist.

11. Verfahren nach einem der vorhergehenden Ansprüche, **dadurch gekennzeichnet, dass** das Kamerasystem (9) derart gesteuert wird, dass die wenigstens zwei Bilder von jedem Behälter (2) in einer Aufnahmeachse erstellt werden, die bei den wenigstens zwei Bilder des jeweiligen Behälters (2) hinsichtlich Lage und Orientierung in Bezug auf die Dreh- oder Schwenkachse identisch ist, beispielsweise radial zur Dreh- oder Schwenkachse orientiert ist.

## Claims

1. Inspection devices for bottles or similar containers (2), with a transport section (4) for the containers (2) and with a camera system (9) to take at least two images of at least one and the same container area (2.1) of each inspected container (2), said area being designed rotationally symmetrical to an axis of rotation or swivel axis, with a device (5, 6) to rotate or swivel the containers (2) around the axis of rotation or swivel axis between the taking of the at least two images and with analysis electronics to analyse the at least two images created of each container (2), **characterised in that**, to detect defects of form in the inspected containers (2), the analysis electronics (10) are designed to compare the at least two images made of each container (2) and then establish a defect of form in a container (2) if the at least two images taken of one and the same container area of this container (2) differ from each other.

2. Inspection device according to claim 1, **characterised by** a transport section (4) on which the containers (2) are moved past the camera system (9) in a transport direction (A).

3. Inspection device according to claim 3, **characterised in that** the camera system (9) has at least two cameras (9.1), offset from each other in transport direction (A), preferably CCD cameras.

4. Inspection device according to any one of the preceding claims, **characterised by** a control device (10) to control the camera system (9) such that the at least two images of each container (2) are taken in a recording axis which is identical for the at least two images of the particular container (2) in terms of its position and orientation in relation to the axis of rotation or swivel axis, for example being oriented radially to the axis of rotation or swivel axis.

5. Inspection device according to any one of the preceding claims, **characterised in that** the camera system (9) has at least two groups of in each case at least two cameras (9.1), and **in that** the at least two cameras (9.1) of each group generate in each case at least one image of one and the same area of the containers (2), for example of the containers (2) moved past the camera system (9).

6. Inspection device according to any one of the preceding claims, **characterised in that** the device for rotating and / or swivelling the containers (2) is made from at least two belts (5, 6) forming setting-down surfaces for the containers (2) and drivable in an endlessly rotating manner at different speeds and / or in different directions.

7. Inspection device according to any one of the preceding claims, **characterised in that** the device for rotating and / or swivelling the containers (2) has rotating and / or swivelling container carriers, for example container carriers for a suspended or standing arrangement of the containers (2), wherein the rotating and / or swivelling container carriers can be moved, e.g. in a transport direction (A).

8. Method for inspecting bottles or similar containers (2) for any defects of form, wherein with a camera system (9), at least two images are generated of one and the same container area (2.1) of each container (2), said area being designed rotationally symmetrical to an axis of rotation or swivel axis, and wherein each container (2) and / or the camera system (9) is rotated around an axis of rotation or a swivel axis between the recording of the at least two images, **characterised in that**, to detect any defect of form of the particular container (2), the at least two images created of each container (2) are compared and in the event of any discrepancy between these images, a defect of form in the relevant container (2) is established.

9. Method according to claim 8, **characterised in that** the containers (2) are moved past the camera system (9) on a transport section (4) in a transport direction (A).

10. Method according to claim 9, **characterised in that** the camera system (9) has at least two cameras (9.1), offset from each other in the transport direction (A), preferably CCD cameras.

11. Method according to any one of the preceding claims, **characterised in that** the camera system (9) is controlled in such a way that the at least two images of each container (2) are taken in a recording axis which is identical for the at least two images of the particular container (2) in terms of its position and orientation in relation to the axis of rotation or swivel axis, for example being oriented radially to the axis of rotation or swivel axis.

## Revendications

1. Dispositif d'inspection de bouteilles ou de contenants (2) similaires, comprenant une ligne de transport (4) pour les contenants (2) et un système de caméra (9) servant à prendre au moins deux images d'au moins une seule et même zone de contenant (2.1), formée de manière symétrique en rotation par rapport à un axe de rotation ou de pivotement, de chaque contenant (2) inspecté, comprenant un système (5, 6) servant à faire tourner ou à faire pivoter les contenants (2) autour de l'axe de rotation ou de pivotement entre les prises des au moins deux images, comprenant également un équipement électronique d'analyse servant à analyser les au moins deux images obtenues de chaque contenant (2),
**caractérisé en ce**
**que** l'équipement électronique d'analyse (10) permettant une comparaison des au moins deux images obtenues de chaque contenant (2) est réalisé aux fins de la détection d'anomalies de forme présentées par les contenants (2) inspectés, et détecte alors une anomalie de forme présentée par un contenant (2) lorsque les au moins deux images obtenues d'une seule et même zone dudit contenant (2) divergent l'une de l'autre.

2. Dispositif d'inspection selon la revendication 1, **caractérisé par** une ligne de transport (4), sur laquelle les contenants (2) se déplacent dans un sens de transport (A) en passant devant le système de caméra (9).

3. Dispositif d'inspection selon la revendication 3, **caractérisé en ce que** le système de caméra (9) présente au moins deux caméras (9.1), de préférence des caméras CCD (à dispositif à transfert de charge), décalées l'une par rapport à l'autre dans le sens de transport (A).

4. Dispositif d'inspection selon l'une quelconque des revendications précédentes, **caractérisé par** un système de commande (10) servant à commander le système de caméra (9) de telle manière que les au moins deux images de chaque contenant (2) sont produites dans un axe de prise de vue, qui est identique dans le cas des au moins deux images de chaque contenant (2) en termes de position et d'orientation par rapport à l'axe de rotation ou de pivotement, par exemple qui est orienté de manière radiale par rapport à l'axe de rotation ou de pivotement.

5. Dispositif d'inspection selon l'une quelconque des revendications précédentes, **caractérisé en ce que** le système de caméra (9) présente au moins deux groupes de respectivement au moins deux caméras (9.1), et **en ce que** les au moins deux caméras (9.1) de chaque groupe génèrent respectivement au moins une image d'une seule et même zone des contenants (2), par exemple des contenants (2) passant devant le système de caméra (9).

6. Dispositif d'inspection selon l'une quelconque des revendications précédentes, **caractérisé en ce que** le système servant à faire tourner et/ou à faire pivoter les contenants (2) est formé par au moins deux bandes (5, 6) formant au moins deux surfaces de dépôt pour les contenants (2) et pouvant être entraînées en rotation sans fin à diverses vitesses et/ou dans diverses orientations.

7. Dispositif d'inspection selon l'une quelconque des revendications précédentes, **caractérisé en ce que** le système servant à faire tourner et/ou à faire pivoter les contenants (2) présente des supports de contenant à rotation et/ou à pivotement, par exemple des supports de contenant permettant de suspendre ou de poser à la verticale les contenants (2), sachant que les supports de contenant à rotation et/ou à pivotement peuvent être déplacés par exemple dans un sens de transport (A).

8. Procédé d'inspection de bouteilles ou de contenants (2) similaires pour la recherche d'éventuelles anomalies de forme, sachant qu'au moins deux images d'une seule et même zone (2.1), formée de manière symétrique en rotation par rapport à un axe de rotation ou de pivotement, de chaque contenant (2) sont produites à l'aide d'un système de caméra (9), et sachant que chaque contenant (2) et/ou le système de caméra (9) sont tournés entre les prises des au moins deux images autour d'un axe de rotation ou de pivotement, **caractérisé en ce que** les au moins deux images obtenues de chaque contenant (2) sont comparées aux fins de la détection d'une éventuelle anomalie de forme présentée par le contenant (2) respectivement inspecté, et **en ce qu'**une anomalie de forme présentée par le contenant (2) concerné est détectée en présence d'une divergence entre lesdites images.

9. Procédé selon la revendication 8, **caractérisé en ce que** les contenants (2) se déplacent sur une ligne de transport (4), dans un sens de transport (A), de manière à passer devant le système de caméra (9).

10. Procédé selon la revendication 9, **caractérisé en ce que** le système de caméra (9) présente au moins deux caméras (9.1), de préférence des caméras CCD (à dispositif à transfert de charge), décalées l'une par rapport à l'autre dans le sens de transport (A).

11. Procédé selon l'une quelconque des revendications précédentes, **caractérisé en ce que** le système de caméra (9) est commandé de telle manière que les au moins deux images de chaque contenant (2) sont produites dans un axe de prise de vue, qui est identique dans le cas des au moins deux images de chaque contenant (2) en termes de position et d'orientation par rapport à l'axe de rotation ou de pivotement, par exemple qui est orienté de manière radiale par rapport à l'axe de rotation ou de pivotement.
